# DEMANDE DE BREVET EUROPEEN

(11) **EP 1 316 894 A1**
(43) Date de publication de la demande: **04.06.2003**
(21) Numéro de dépôt: 02102590.3
(22) Date de dépôt: 14.11.2002
(51) Int. Cl.: G06F 17/21, G06F 17/30

(54) **Procédé de gestion d'un document principal**

(30) Priorité: 22.11.2001 FR 0115146
(71) Demandeur: CEGETEL, 92915 Paris La Défense Cedex (FR)
(72) Inventeur: Bouthors, Nicolas, 38240, MEYLAN (FR)
(74) Mandataire: Schmit, Christian Norbert Marie

(57) **Abrégé**

On structure un document 201 principal, en deux parties. Une partie (203) source comportant de l'information brute, et une partie (204) structurante. La partie structurante comporte plusieurs sous-parties (G1, G2, ... GN), que l'on appelle parties grammaticales. Chaque partie grammaticale correspond à un niveau d'enrichissement de la partie source. Un utilisateur, accédant au document principal peut choisir une ou plusieurs parties grammaticales pour enrichir le document source. Les parties grammaticales sont, soit appliquées en même temps pour visualiser le document principal enrichi simultanément par toutes ces parties grammaticales choisies, soit appliquées de manière à produire plusieurs documents secondaires, chacun de ces documents secondaires correspondant à une ou plusieurs parties grammaticales choisies.

## Description

La présente invention a pour objet un procédé de gestion d'un document principal. Le domaine de l'invention est celui des systèmes de gestion de documents et d'écrans permettant l'affichage de ces documents. Le domaine de l'invention est donc en particulier celui des livres électroniques mais pas uniquement. Le domaine de l'invention est plus généralement celui des systèmes permettant de produire une image correspondant à une information que souhaite visualiser un utilisateur du système. Un but de l'invention est de permettre de valoriser un même document source en le présentant de multiples façons. Un autre but de l'invention est de pouvoir proposer des services, liés à la consultation d'un document, ces services étant susceptibles d'évoluer dans le temps.

Dans l'état de la technique, on connaît les livres électroniques, aussi appelés "e-book". Cependant les solutions liées au livre électronique sont basées sur des approches fermées, comme par exemple le système CYTALE. Un document selon ce système est construit selon une grammaire, dite grammaire XML (eXtended Markup Language pour langage de balise étendu) unique, une seule application peut gérer cette grammaire à un moment donné, il n'est donc pas possible d'enrichir le document hormis dans le cadre de la grammaire déjà établie. En effet, un document au format XML, a une syntaxe qui est définie par une grammaire. Cette grammaire est en général nommée dans l'entête du document XML. La syntaxe du document XML répond alors strictement à cette grammaire. Le document lui-même intègre alors les éléments de cette grammaire. Une fois le document écrit, il est donc très difficile, en fait impossible, de le faire efficacement et significativement évoluer, son évolution étant limité par sa grammaire.

De ce fait, les utilisations des livres électroniques sont limitées et ne peuvent apporter de fonctions réellement et significativement intéressantes par rapport à un livre papier. De plus les fonctions apportées sont alors figées.

Dans l'état de la technique les grammaires les plus répandues sont connues sous le nom de DTD pour Document Type Definition c'est-à-dire définition de type de documents. Une grammaire précise comment est structuré le document. Des programmes génériques d'analyse lexicale peuvent alors vérifier que le document est conforme à la grammaire et ainsi éviter de nombreuses erreurs induites par une mauvaise syntaxe dans le document.

Ainsi un document au format XML est enrichi par un certain nombre de "tags", ou balises, qui servent à structurer le document, et permettent éventuellement de le transformer plus tard via des applications. Une grammaire définit alors la structure syntaxe, et la nature, des informations que l'on doit retrouver entre des balises elles aussi définies par la grammaire, pour que le document soit conforme à cette grammaire.

Dans l'état de la technique, un fichier au format XML peut également faire référence à un autre fichier que l'on appelle une feuille de style et qui sert à mettre en forme le document XML. Ce fichier est spécifié dans le langage XSL pour eXtensible Stylesheet Language, c'est-à-dire langage étendu de feuille de style. Ce langage permet de définir ce que l'on appelle des feuilles de style. Une feuille de style permet de définir une présentation pour des données enregistrées dans un format XML. Cette architecture de document permet de pouvoir clairement séparer les commandes de mise en forme des informations de structuration des données elles-mêmes. Ainsi un document au format XML de l'état de la technique comporte, un en-tête dans lequel on retrouve des informations de grammaire et, des informations de style, il comporte aussi un corps de document comportant les données structurées en utilisant la syntaxe définie par la grammaire.

On obtient donc, avec ce modèle, un bon niveau de flexibilité. En revanche on ne peut associer qu'une seule grammaire à un document, et à un instant donné qu'une seule application ou feuille de style. En effet dans le modèle XML standard le document, et les données elles-mêmes, sont structurées via la grammaire. Grammaire et données sont donc indissociables. Les problèmes apparaissent avec la variété des possibilités que souhaite se voir offrir l'utilisateur qui accède aux données comprises dans le document. En effet l'utilisateur peut souhaiter avoir accès au document de manière rapide, de façon analytique, avec des annotations de sources variées, avec des références internes ou externes, chacun de ces modes d'accès étant susceptible d'être enrichi par divers apports textuels ou autres. Dans l'état de la technique on est incapable de répondre à ces besoins. En effet les documents au format XML existant sont figés et ne permettent pas de réelle évolution, sauf à recréer entièrement un nouveau document XML. Cela implique entre autres de dupliquer la formation du document, ce qui en terme de maintenance et d'intégrité référentielle représente un important inconvénient.

L'invention résout ces problèmes en gérant un document via une syntaxe XML spécifique. Un document selon l'invention comporte alors principalement deux parties, une partie structurante, et une partie comportant les données à structurer. La partie structurante comporte alors des informations permettant de structurer les données selon plusieurs grammaires, et de les associer avec différentes applications. Ces multiples associations des données avec des grammaires variées permettent d'obtenir des vues multiples susceptibles de satisfaire tous les besoins d'une personne accédant aux données.

A partir d'un document selon l'invention on est donc capable de produire un document à un format XML standard, c'est-à-dire comportant des données structurées susceptibles d'être mises en page via une feuille de style par exemple. Un document selon l'invention permet de produire plusieurs documents secondaires dans un format standard, chacun des documents secondaires correspondant à une attente de la personne consultant les données enregistrées dans le document. Un document selon l'invention permet aussi d'appliquer plusieurs grammaires à des données, ce qui permet de moduler le niveau d'enrichissement des données.

Avec l'invention on est aussi capable d'ajouter, ou de retirer, des éléments à la partie structurante, sans altérer, ni sans avoir à altérer, la partie de données. Avec l'invention il est aussi possible de modifier une partie de la partie structurante sans altérer le reste de la partie structurante.

L'invention permet donc de résoudre les problèmes de l'état de la technique avec une grande souplesse.

L'invention a donc pour objet un procédé de gestion d'un document principal dans lequel le document principal comporte des moyens pour structurer ledit document principal en parties distinctes, caractérisé en ce qu'on structure le document principal en au moins deux parties:
- une partie, appelée document source, comportant des données intéressant une personne accédant au document principal,
- une partie structurante, comportant au moins une partie grammaticale, correspondant à une grammaire, pour structurer le document source selon au moins cette grammaire.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1 : une illustration de moyens utiles à la mise en oeuvre de l'invention.
Figure 2 : une illustration de la structure d'un document selon l'invention et de sa mise en oeuvre par des étapes du procédé selon l'invention.

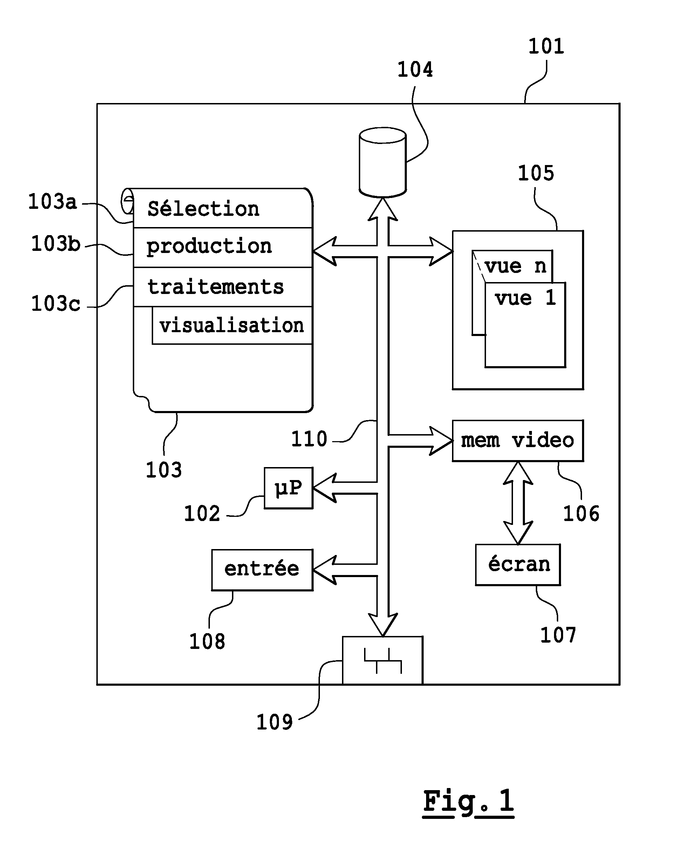

La figure 1 montre un dispositif 101 qui est, par exemple, un livre électronique ou e-book. Le dispositif 101 comporte un microprocesseur 102 capable d'exécuter des codes instruction enregistrés dans une mémoire 103 de programme. La mémoire 103 est divisée en plusieurs zones. Chaque zone comporte des codes instruction réalisant une fonction. On ne parlera ici que des zones intéressant plus spécifiquement l'invention. En règle générale lorsque l'on prête une action au microprocesseur 102, ou au dispositif 101, cette action est effectuée par l'exécution par le microprocesseur 102 de codes instruction enregistrés dans une zone de la mémoire 103.

La mémoire 103 comporte une zone 103a correspondant à une sélection, et/ou activation, d'une grammaire dans un document selon l'invention.

Une zone 103b correspond à la production, à partir d'une grammaire sélectionnée et de données enregistrées dans le document selon l'invention, d'un document secondaire.

Une zone 103c correspond à des traitements que l'on peut effectuer sur un document secondaire. Ces traitements sont par exemple une visualisation.

Le dispositif 101 comporte aussi une mémoire, ou disque, 104 dite mémoire de stockage. La mémoire 104 permet d'enregistrer des documents à un format selon l'invention. Ces documents sont en fait enregistrés sous forme d'un fichier.

Le dispositif 101 comporte une mémoire 105 où sont enregistrés des documents secondaires produits par le microprocesseur 102.

Le dispositif 101 comporte une mémoire 106 vidéo dans laquelle le microprocesseur 102 écrit une image qui doit être affichée sur un écran 107 interfacé avec la mémoire 106 vidéo. L'écran 107 est soit interne au dispositif 101, soit connecté au dispositif 101 par une circuiterie non représentée. Dans la pratique, cette circuiterie permet de transformer le contenu de la mémoire 106 en signaux affichables par un écran.

Le dispositif 101 comporte aussi des périphériques 108 d'entrée, un tel périphérique étant par exemple une souris, ou une boule de manoeuvre. Le dispositif 101 comporte aussi des circuits 109 pour se connecter à un réseau, par exemple le réseau Internet. Les éléments 102 à 106, 108, et 109 sont connectés via un bus 110. On rappelle qu'un bus est un ensemble de fils ou de pistes comportant ces éléments en nombre suffisant pour véhiculer des signaux de commandes, d'adresses, de données, d'interruption, d'horloge et d'alimentation. On rappelle aussi que les mémoires 103 à 106, bien qu'ayant été représentées de manière éclatée, peuvent en fait coexister sur une mémoire unifiée. La représentation de ces mémoires n'est pas restrictive quant à leur implantation.

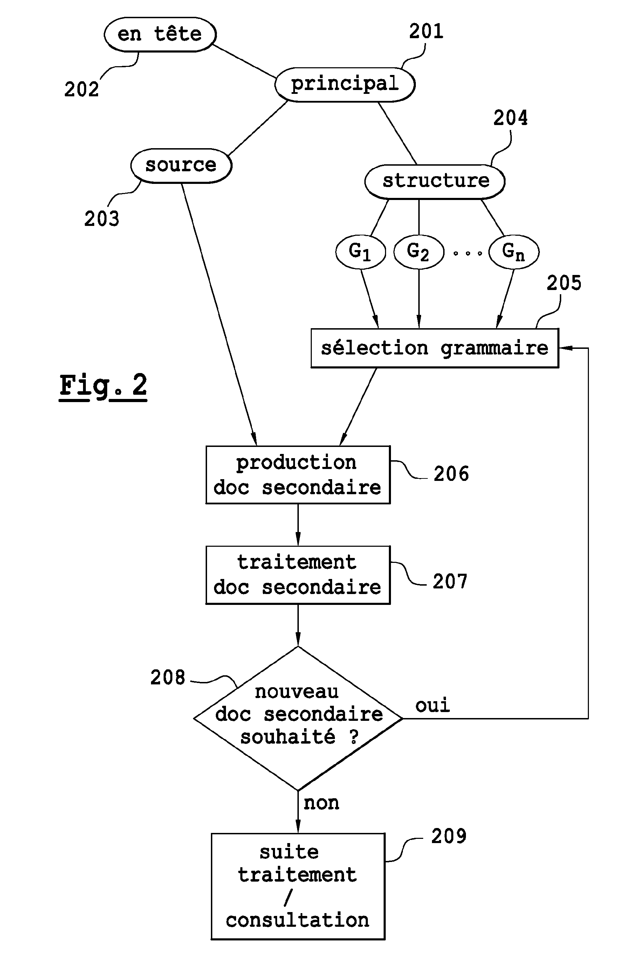

La figure 2 montre un document 201 selon l'invention. Un tel document est aussi appelé document principal, ou multidocument. Selon l'invention un tel document est divisé en au moins deux parties. Dans une mise en oeuvre préférée, un tel document est dans un format XML. Le standard XML est défini par une recommandation du W3C, pour World Wilde Web Consortium, c'est-à-dire Association de la toile mondiale, du 10 février 1998. Cette recommandation, appelée XML1.0, est disponible sur le site Internet du W3C à l'adresse www.w3c.org/xml.

Le document 201 comporte un en-tête 202. Un tel en-tête correspond, par exemple, aux trois premières lignes de l'exemple ci-dessous. Par la suite les références faites à des lignes se rapportent aux lignes de l'exemple ci-dessous.

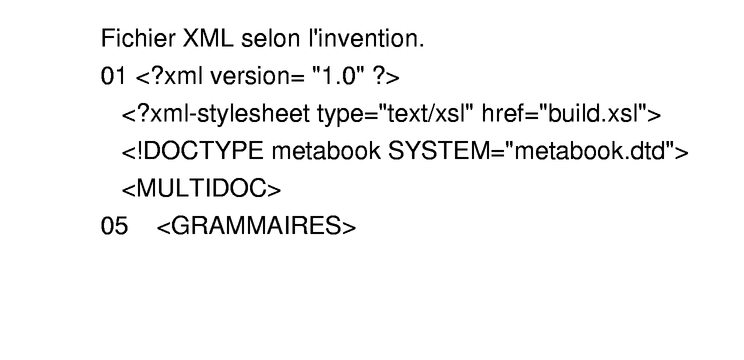

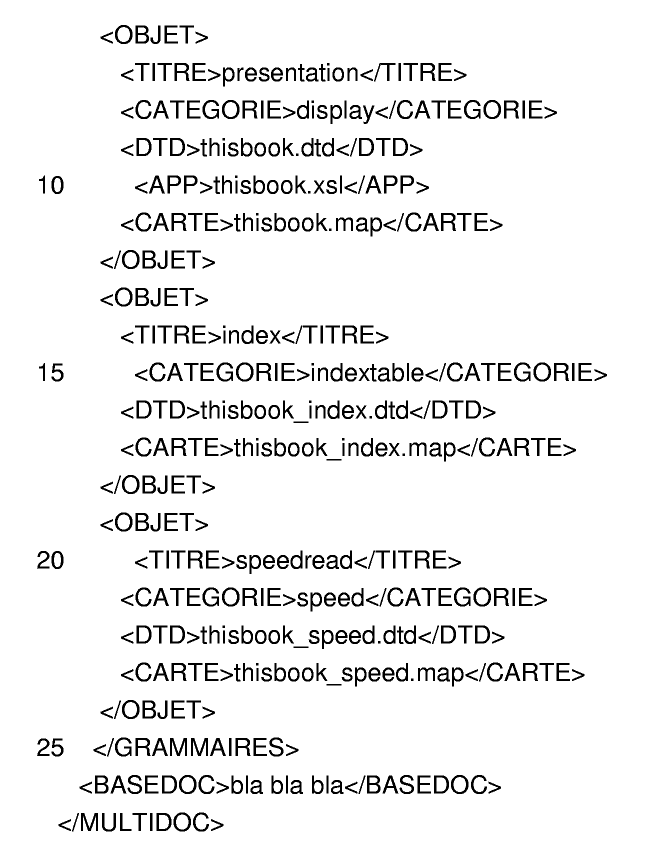

La ligne 1 indique quelle version du standard XML est utilisée pour écrire le document, la ligne 2 indique quelle feuille de style peut être utilisée pour afficher le contenu du document, et la ligne 3 indique à quelle grammaire obéit la syntaxe du document. La syntaxe de ces trois lignes est définie par le standard W3C. La ligne 2 de l'exemple de fichier XML montre que la feuille de style est au format XSL. Il existe d'autres standards pour les feuilles de style, par exemple CSS (Cascaded Style Sheet, pour feuille de style cascadée), eux aussi utilisables par l'invention. Le format XSL est lui aussi défini par le W3C pour effectuer la représentation des données de document XML. Les trois premières lignes de l'exemple de fichier XML signifient donc que le document selon l'invention est rédigé selon un formalisme correspondant à la version 1.0 du standard XML, que la feuille de style qui peut être utilisée pour représenter les données que comporte le fichier exemple est appelé "build.xsl", et que la syntaxe du document contenu dans le fichier exemple doit répondre à la grammaire enregistrée dans le fichier nommé "metabook. dtd". Les noms de fichier utilisé pour la description sont arbitraires, seul compte leur contenu. Il en va ainsi des tous les noms de fichiers cités dans la description.

L'invention n'est pas affectée par la présence ou l'absence de ces trois premières lignes. Ces trois premières lignes sont utiles, mais non nécessaires, dans le cadre d'une mise en oeuvre de l'invention en utilisant un formalisme XML.

Le document 201 principal comporte une partie 203 source. Cette partie est aussi appelée document source, ou document de base. Dans l'exemple de fichier XML cette partie correspond en fait à la ligne 26 de l'exemple. La partie 203 document source est encadrée par deux balises l'une d'ouverture <BASEDOC> et l'autre de fermeture </BASEDOC>. Cela correspond au formalisme XML qui encapsule les données, et les structures, en utilisant des balises de début et de fin de partie. Une balise de fin porte, de préférence, le même nom que la balise de début précédé d'un " / ". Une balise, au format XML est encadrée par < et >. D'autres conventions de notation, c'est-à-dire différentes de celles employées dans la recommandation XML, peuvent être employées pour la délimitation des parties, sans que cela affecte l'invention.

Les informations contenues entre <BASEDOC> et </BASEDOC> correspondent aux données auxquelles souhaite accéder la personne accédant au document 201 principal. Entre les deux balises précitées les informations sont enregistrées de manière brute, c'est-à-dire au format texte sans mise en page. Dans un exemple préféré ces informations ne comportent alors aucune balise.

Dans une variante préférée de l'invention les données sont enregistrées in extenso entre les deux balises. Dans une autre variante de l'invention on trouve entre les deux balises une référence à un fichier externe comportant les données.

Une telle référence se présente, de manière préférée, sous la forme d'une URL, pour Universal Resource Locator, c'est-à-dire adresse universelle d'une ressource. Grâce à cette référence on peut donc désigner soit un fichier enregistré dans une mémoire du dispositif 101, soit un fichier accessible via les circuits 109, et un réseau auquel est connecté le dispositif 101.

Le document 201 comporte aussi une partie 204 structurante. Cette partie est, elle aussi, encadrée par deux balises, l'une ouvrante l'autre fermante. Dans l'exemple choisi, la balise ouvrante est <GRAMMAIRES>, et la balise fermante est </ GRAMMAIRES >.

Dans l'exemple choisi le document 203 source et la partie 204 structurante sont placés eux-mêmes entre deux balises l'une ouvrante l'autre fermante. Ces balises sont <MULTIDOC> et </MULTIDOC>. Ces balises ne sont pas fondamentales, mais leur présence permet, éventuellement, d'enregistrer plusieurs multidocuments dans un même fichier au format selon l'invention. Cela signifie, que l'on pourrait, à la suite de la balise </MULTIDOC>, enregistrer une autre structure, correspondant à la structure d'un document selon l'invention, mais ayant des parties sources et structurantes différentes du premier multidocument.

La partie 204 structurante est, elle aussi, divisée en plusieurs parties dites parties grammaticales. Ces parties grammaticales sont identifiées de G1 à GN. Chacune de ces parties grammaticales est enregistrée entre une balise ouvrante et une balise fermante. Dans notre exemple on a choisi les balises <OBJET> et </OBJET>. L'exemple de fichier XML montre un document comportant trois parties grammaticales. Une partie grammaticale comporte à son tour plusieurs champs. Chacun de ces champs a une valeur, chacun de ces champs est délimité par une balise ouvrante et une balise fermante. Ainsi la grammaire G1 correspond aux lignes 6 à 12 de l'exemple de fichier XML, la grammaire G2 correspond aux lignes 13 à 18 du même exemple et la grammaire G3, c'est-à-dire GN, correspond aux lignes 19 à 24 de l'exemple. On se bornera ici à décrire la structure de la partie grammaticale G1, puisque la structure des autres parties grammaticales est identique.

La partie grammaticale G1 comporte, ligne 9, une référence à un fichier dont le nom est "thisbook.dtd". Cette référence est comprise entre deux balises, l'une ouvrante l'autre fermante, qui sont <DTD> et </DTD>. On associe donc ainsi une grammaire à cette partie grammaticale. Cela signifie que le document secondaire qui sera produit à l'aide de cette partie grammaticale aura la structure, ou syntaxe, définie par cette grammaire attachée. Cela signifie encore que l'activation de cette partie grammaticale provoquera la mise en oeuvre de la grammaire, attachée à cette partie grammaticale, sur le document source. La référence est de même nature que celle définie pour le document 203 source. Il en va de même pour la nature de toute référence à un fichier dans la suite de la description. Dans une variante de l'invention la référence peut être tout simplement l'inclusion in extenso du contenu de la grammaire entre les deux balises ouvrante et fermante <DTD> et </DTD>.

La grammaire G1 comporte aussi un champ carte enregistré entre deux balises ouvrante et fermante, <CARTE> et </CARTE>. Cela correspond à la ligne 11 de l'exemple de fichier XML. Cela permet de faire une référence à un fichier appelé "thisbook.map".

Une utilisation de ce fichier carte sera illustrée lors de la description de l'étape de production d'un document secondaire.

La partie grammaticale G1 comporte aussi des champs appelés TITRE, CATEGORIE et APP. Ces champs permettent de définir des applications susceptibles de mettre en oeuvre un document ayant une structure compatible avec la grammaire attachée à la partie grammaticale G1. En particulier APP fait référence à une feuille de style enregistrée dans un fichier appelée "thisbook.xsl". Le champ TITRE est assimilable à un titre pour la partie grammaticale. Ce titre permet à un utilisateur accédant au document 201 principal de se faire une rapide idée de l'utilité de cette partie grammaticale, et sur les effets de sa mise en oeuvre. Le champ CATEGORIE est identique au champ TITRE si ce n'est qu'il fournit une autre clé de classement pour les parties grammaticales. Le nombre de champs possible pour une partie grammaticale n'est pas limité.

Lorsqu'un utilisateur accède à un document selon l'invention, il commence par effectuer le choix d'une partie grammaticale. Cela est l'étape 205 de sélection d'une grammaire.

Dans la partie 205 l'utilisateur est face au dispositif 101 qu'il a préalablement mis sous tension et il a sélectionné, via une interface non décrite, un fichier auquel il souhaite accéder sur le disque 104. Ce fichier est dans un format selon l'invention. L'utilisateur doit donc sélectionner selon quel mode, c'est-à-dire via la mise en oeuvre de quelle partie grammaticale, il souhaite accéder à ce fichier. Le microprocesseur 102 parcourt alors la partie 204 structurante du fichier sélectionné par l'utilisateur. Il constate alors qu'il s'agit d'un fichier au format XML version 1.0 qui répond à une grammaire référencée ligne 3 de l'exemple de fichier XML, et qu'il peut être présenté en utilisant la feuille de style référencée à la ligne 2 de l'exemple de fichier XML.

Dans la pratique cela signifie que le microprocesseur 102 extrait de la partie 204 structurante les informations indiquant à l'utilisateur quelles applications il peut utiliser pour accéder aux données de la partie 203 source. Ces applications sont présentées, par exemple, sous forme d'une liste produite par le microprocesseur 102 à partir de la partie 204 structurante. Cette liste est présentée à l'utilisateur pour qu'il y fasse un choix.. Dans l'exemple de fichier XML choisi pour illustrer l'invention, l'utilisateur a donc le choix entre une présentation in extenso du document c'est la partie grammaticale G1, un index du document c'est la partie grammaticale G2, et une lecture rapide du document c'est la partie grammaticale G3. Les informations présentées à l'utilisateur correspondent, par exemple, aux contenus des champs TITRE des parties grammaticales.

L'utilisateur du dispositif 101 utilise les moyens 108 d'entrée du dispositif 101 pour sélectionner l'une des parties grammaticales. Considérons que l'utilisateur sélectionne la partie grammaticale G1. On passe alors à une étape 206 de production d'un document secondaire.

Dans l'étape 206 le microprocesseur 102 extrait du document 201 principal le fichier carte correspondant à la partie grammaticale qui a été sélectionnée par l'utilisateur à l'étape 205. Le microprocesseur 102 extrait aussi du document principal le document 203 source. Le fichier carte ainsi extrait comporte des indications sur des éléments qu'il convient d'insérer dans le document 203 source pour produire un document secondaire correspondant aux desiderata de l'utilisateur. Ces éléments sont des balises correspondant à la grammaire attachée à la partie grammaticale sélectionnée à l'étape 205. Ces éléments sont aussi, par exemple, des apports sous forme de texte, de son ou de vidéo. Le résultat de la production, est, dans un exemple préféré, un fichier au format XML standard.

Les indications pour l'insertion comporte, par exemple et en plus de l'élément à insérer, une information de localisation de l'élément, à insérer, dans le document 203 source. En d'autres termes un fichier carte comporte des paires élément/localisation, un élément étant (par exemple) une balise, une localisation étant (par exemple) un nombre correspondant à une position, en nombre de caractères, dans le document 203 source.

Les balises introduites, permettent ainsi de définir des attributs pour certaines parties des données, par exemple des attributs de mise en page. Ces balises introduites permettent aussi de définir des liens vers d'autres documents, ou vers d'autres parties du document secondaire produit. Les balises introduites permettent encore de provoquer une réaction de la part du dispositif 101 lors de certaines actions de l'utilisateur durant son parcours du document secondaire produit. De telles actions sont, par exemple, une mise en surbrillance d'une partie du document, une fenêtre, dite fenêtre POPUP, qui s'affiche donc lorsque l'utilisateur effectue une action. Ces actions sont par exemple un clic sur une certaine partie du document secondaire, ou le simple passage du pointeur d'une souris sur une partie du document secondaire.

Dans l'exemple choisi le document secondaire produit sera donc un document au format XML dont la syntaxe sera cohérente avec la grammaire définie par le fichier "thisbook.dtd" et dont l'affichage se produira selon la feuille de style enregistrée dans le fichier nommé "thisbook.xsl".

Une fois produit, le document secondaire est enregistré dans la mémoire 105. On passe alors à une étape 207 de traitement du document secondaire. La plupart du temps il s'agit d'une prise en charge du document secondaire par le système de visualisation du dispositif 101. En d'autres termes le document secondaire est fourni comme argument à un programme de visualisation compatible avec la syntaxe du document secondaire. En effet le document secondaire est un document dit XML standard, c'est-à-dire qu'il peut être pris en charge par n'importe quel livre électronique. Un livre électronique est lui-même capable d'afficher, de manière simultanée, plusieurs documents. Le traitement correspond donc à la gestion de cet affichage simultané ainsi qu'aux événements qui peuvent se produire lors du parcours de ces documents.

On passe à une étape 208 dans laquelle on cherche à déterminer si l'utilisateur souhaite visualiser un autre document. Cette étape permet d'illustrer le fait qu'à partir d'un même document 201 principal l'utilisateur peut produire plusieurs documents secondaires différents. Ces documents secondaires seront alors enregistrés dans la mémoire 105 et chacun traité comme un document indépendant. L'utilisateur peut donc avoir simultanément deux vues distinctes des mêmes données du document 201 principal.

Si l'utilisateur du dispositif 101 sélectionne un nouveau document on repasse alors à l'étape 205. Sinon on passe à une étape 209 de suite de traitements ou de consultations des documents secondaires enregistrés dans la mémoire 105.

Dans l'étape 209 la consultation, ou le traitement quelconque, d'un document secondaire enregistré dans la mémoire 105 se passe comme avec n'importe quelle application multifenêtrée sur un ordinateur de bureau.

Dans la pratique l'association d'un document XML avec une feuille de style permet de produire un document au format HTML, c'est-à-dire langage de balise hypertexte, affichable dans un navigateur Internet. Ainsi dans l'invention on est capable, à partir d'un même document 201 principal, de produire plusieurs documents secondaires dont l'affichage correspondra en fait à l'affichage de plusieurs documents au format HTML. Cela n'est qu'un exemple et il existe d'autres formats que l'on peut produire à partir d'un document XML et d'une feuille de style associée.

Dans l'invention la seule partie invariante d'un document 201 principal, est la partie 203 document source. La partie 204 structurante peut être modifiée au gré de divers services que l'on souhaite rendre à l'utilisateur du dispositif 101 accédant au document 201 principal. Ces modifications sont, par exemple, l'ajout d'une partie grammaticale, la suppression d'une partie grammaticale ou la modification d'une partie grammaticale. Cela permet une très grande souplesse dans la gestion du contenu du document 201 principal et dans la présentation des informations qu'il contient.

Dans une variante de l'invention, dans l'étape 205, l'utilisateur du dispositif 101 choisit un certain nombre de partie grammaticale, dans la pratique au moins une, qu'il souhaite activer lors de l'accès aux données du document 203 source. Dans cette variante, la mise en oeuvre des parties grammaticales se fait dans le cadre d'un accès partagé à la ressource d'affichage, c'est-à-dire à l'écran. Il faut, en effet, que chaque application, chacune étant associée à une partie grammaticale activée, puisse proposer ses services. Dans un exemple, on considère qu'un utilisateur active une première partie grammaticale permettant d'afficher les données du document 203 source avec une certaine mise ne page. L'utilisateur active aussi une deuxième partie grammaticale correspondant à une définition de certains mots techniques utilisés dans les données du document 203 source. La mise en oeuvre de la première partie grammaticale permet à l'utilisateur de parcourir les données du document source, ces données étant maintenant paginées et mises en forme. A chaque fois qu'une page est affichée, c'est-à-dire que l'on fait défiler l'affichage, l'application d'affichage notifie l'ensemble des parties grammaticales activées pour déterminer si, en fonction de l'endroit du document 203 source qui est visualisé, il y a lieu d'entreprendre une action en fonction de l'une des parties grammaticales activées. En fonction des fichiers cartes, et des parties grammaticales activées, on met alors en oeuvre les éléments de syntaxes prévus, par les parties grammaticales activées, pour la partie du document 203 source qui est affichée. Dans notre exemple la deuxième partie grammaticale activée permet alors d'afficher certaines expressions de manière surlignée. Le fait pour l'utilisateur de sélectionner, avec un dispositif de pointage, une expression surlignée provoque alors l'affichage de la définition du mot ou de l'expression.

Cette variante permet d'appliquer plusieurs parties grammaticales sur le document 203 source, et ce de manière simultanée.

Tout au long de la description nous utilisons des balises que nous nommons. Ces balises définissent des parties et ou champ dans un document selon l'invention. Les noms de ces balises ne sont pas important, mais les parties, et ou champs, définies par elles le sont. On obtiendrait le même résultat en employant d'autres noms, ou une autre syntaxe, pour les balises.

Dans la description on emploie, comme exemple d'application, des feuilles de styles et leurs mises en oeuvres pour produire un document affichable. Dans une variant le champ APP peut faire référence à un fichier exécutable capable d'interpréter le document source auquel aura été appliqué au moins une partie grammaticale.

Dans une variante de l'invention, n'importe quelle référence à un fichier peut se traduire par une inclusion du contenu du fichier à la place de la référence. Cela signifie en fait qu'il n'y a pas de référence, mais une information correspondant à la nature du champ. En d'autres termes, et par exemple, entre les balises <DTD> et </DTD>, on trouve alors la description d'une grammaire, et non plus la référence à un fichier comportant cette description.

## Revendications

1. Procédé de gestion d'un document principal dans lequel le document principal comporte des moyens pour structurer ledit document principal en parties distinctes, **caractérisé en ce qu'**on structure le document principal en au moins deux parties :
- une partie (203) appelée document source, comportant des données intéressant une personne accédant au document principal,
- une partie (204) structurante comportant plusieurs parties grammaticales, chacune correspondant à une grammaire et chacune correspondant à une structure pour le document source, pour structurer le document source selon chaque grammaire.

2. Procédé selon la revendication 1, **caractérisé en ce que** les moyens pour diviser le document en parties distinctes comporte une balise de début de partie et une balise de fin de partie.

3. Procédé selon l'une des revendication 1 ou 2, **caractérisé en ce que** la partie document source comporte une référence à un fichier comportant les données intéressant une personne accédant au document principal.

4. Procédé selon l'une des revendications 1 à 3, **caractérisé en ce qu'**une partie grammaticale comporte une référence à un fichier grammaire comportant la description d'une grammaire.

5. Procédé selon l'une des revendications 1 à 4, **caractérisé en ce qu'**une partie grammaticale comporte une référence à au moins une application comportant des moyens d'interprétation de la grammaire correspondant à ladite partie grammaticale.

6. Procédé selon la revendication 5, **caractérisé en ce que** l'application est une feuille de style.

7. Procédé selon l'une des revendications 1 à 6, **caractérisé en ce qu'**une partie grammaticale comporte un référence à un fichier carte décrivant les endroits du document source où insérer des éléments correspondant à la grammaire de ladite partie grammaticale.

8. Procédé selon la revendication 7, **caractérisé en ce que** le fichier carte comporte des instructions pour produire une version du document source comportant des données additionnelles.

9. Procédé selon l'une des revendications 7 ou 8, **caractérisé en ce qu'**on produit, à partir d'au moins un fichier carte référencé dans une partie grammaticale et d'au moins le document source, un document secondaire à un format standard de description, de préférence le format langage à balise étendue.

10. Procédé selon la revendication 9, **caractérisé en ce que** on utilise (207) le document secondaire comme argument d'un programme de visualisation compatible avec la syntaxe du document secondaire.

11. Procédé selon l'une des revendications 3, 4, 5 ou 7, **caractérisé en ce qu'**une référence est de type adresse universelle de ressource.

12. Procédé selon l'une des revendications 3, 4, 5, 7, ou 11 **caractérisé en ce qu'**une référence à un élément correspond à l'inclusion in-extenso de cet élément.

13. Procédé selon l'une des revendications 1 à 12, **caractérisé en ce qu'**on modifie le contenu de la partie structurante sans affecter le document principal.

14. Procédé selon l'une des revendications 1 à 13, **caractérisé en ce qu'**on modifie le contenu d'une partie grammaticale sans affecter les autres parties grammaticales de la partie structurante.

15. Procédé selon l'une des revendications 1 à 14, **caractérisé en ce que** lors d'un accès au document principal par un utilisateur:
- on produit (205), à partir de la partie caractérisante, une liste d'application possible pour l'accès au document principal,
- on présente (205) à l'utilisateur la liste produite pour qu'il choisisse au moins un élément possible de la liste,
- on présente (206) le document principal selon la, ou les, possibilité choisie par l'utilisateur.
